## Europäisches Patentamt
## European Patent Office
## Office européen des brevets

(19)

(11) Numéro de publication: **0 210 914**
**B1**

(12)

# FASCICULE DE BREVET EUROPÉEN

(45) Date de publication du fascicule du brevet:
06.12.89

(51) Int. Cl.⁴: **A 47 J 27/092**

(21) Numéro de dépôt: 86401609.2

(22) Date de dépôt: 18.07.86

(54) Autocuiseur à dispositif de sécurité à fuite contrôlée du joint d'étanchéité.

(30) Priorité: 26.07.85 FR 8511471

(43) Date de publication de la demande:
04.02.87 Bulletin 87/6

(45) Mention de la délivrance du brevet:
06.12.89 Bulletin 89/49

(84) Etats contractants désignés:
AT BE CH DE FR GB IT LI LU NL SE

(56) Documents cité:
DE-A-2 719 233
DE-C-877 056
FR-A-1 193 541
FR-A-1 334 877
FR-E-63 947
GB-A-682 345

(73) Titulaire: SEB S.A., F-21260 Selongey (FR)

(72) Inventeur: Sebillotte, Christian, 6 rue des
Moutons, F-21260 Selongey (FR)

(74) Mandataire: Bouju, André, Cabinet Bouju 38
avenue de la Grande Armée, F-75017 Paris (FR)

LIBER, STOCKHOLM 1989

# Description

La présente invention concerne un autocuiseur équipé d'un dispositif de fuite contrôlée du joint d'étanchéité.

On sait que, pour des raisons de sécurité destinées à éviter un dégagement brutal de vapeur lorsque l'utilisateur ouvre par mégarde l'autocuiseur sans avoir fait chuter la pression à l'intérieur de celui-ci, on prévoit généralement des dispositifs de sécurité entraînant un dégagement de vapeur contrôlé dès le début du mouvement d'ouverture de l'autocuiseur. Un tel dispositif sert également à empêcher une montée en pression de l'autocuiseur si celui-ci est mal fermé.

En particulier, dans le cas des autocuiseurs comportant un système de fermeture à baïonnette, l'un des dispositifs de sécurité utilisés est un poussoir monté sur le côté du couvercle et généralement disposé dans la poignée de celui-ci, passant dans une ouverture latérale du couvercle à l'aplomb d'un des moyens de fermeture à baïonnette du couvercle et poussé vers le joint d'étanchéité entre le couvercle et la cuve par des moyens de rappel. En position de fermeture de l'autocuiseur, le poussoir est repoussé contre l'action des moyens de rappel par une des rampes de fermeture de la cuve et le joint remplit totalement sa fonction d'étanchéité. Lorsque le couvercle est mal fermé ou lors du début d'ouverture de l'autocuiseur, le poussoir s'échappe de la rampe et pousse le joint d'étanchéité vers l'intérieur de la cuve, créant ainsi une fuite entre le joint d'étanchéité et la cuve, ce qui évite la montée en pression d'un autocuiseur mal fermé ou, respectivement, ramène la pression à l'intérieur de l'autocuiseur à la pression atmosphérique avant son ouverture totale. Un dispositif de ce type est décrit dans le FR-A-1 193 541.

Toutefois, en raison des tolérances de fabrication des différents composants (cuve, couvercle, joint d'étanchéité et ressort de rappel du poussoir), la fuite ainsi créée par les dispositifs existants, peut varier dans des proportions notables et être soit trop faible, ce qui provoque une montée en pression ou un maintien d'une pression résiduelle dans l'autocuiseur, soit trop forte, ce qui provoque un dégagement de vapeur important, dangereux pour l'utilisateur lors d'une ouverture d'un autocuiseur sous pression.

Un but de la présente invention est de proposer un autocuiseur comportant un dispositif de fuite contrôlée du joint d'étanchéité dont le débit de fuite soit à peu près constant quelles que soient les tolérances de fabrication des composants de l'autocuiseur.

En vue de la réalisation de ce but, on prévoit selon l'invention un autocuiseur comportant une cuve, un couvercle, un joint d'étanchéité entre la cuve et le couvercle, des rampes ménagées respectivement sur le bord de la cuve et le bord du couvercle coopérant ensemble pour assurer une fermeture à baïonnette, un dispositif de fuite contrôlée du joint d'étanchéité comportant un poussoir monté sur le couvercle, passant dans une ouverture latérale du couvercle et agissant contre le joint sous l'action de moyens de rappel, ce poussoir étant retenu par une rampe de la cuve lorsque le couvercle est complètement fermé et ce poussoir poussant le joint vers l'intérieur de la cuve lorsque le couvercle est incomplètement fermé et que ce poussoir n'est plus retenu par ladite rampe, caractérisé en ce que le joint d'étanchéité comprend au moins une gorge parallèle à un bord de celui-ci et ménagée sur une face de ce joint adjacente au bord de la cuve comprenant lesdites rampes, la position de cette gorge par rapport au bord de la cuve étant telle que lorsque le couvercle est complètement fermé, cette gorge est en appui sur les rampes faisant saillie à l'extérieur de la cuve et communique vers l'extérieur dans les zones intermédiaires entre les rampes, cette gorge communiquant avec l'intérieur de la cuve lorsque le couvercle est incomplètement fermé est que le joint est poussé vers l'intérieur de la cuve par le poussoir.

Ainsi, lorsque l'autocuiseur est convenablement fermé, le joint d'étanchéité exerce normalement sa fonction et l'autocuiseur peut être mis en pression. Au contraire, lors de l'ouverture de l'autocuiseur ou lorsque celui-ci est mal fermé, le poussoir du dispositif de sécurité pousse localement le joint d'étanchéité vers l'intérieur de la cuve et la gorge du joint d'étanchéité établit alors une communication calibrée entre l'intérieur de la cuve et l'extérieur de celle-ci.

Selon une version préférée de l'invention, le joint comprend un talon portant deux lèvres d'étanchéité dirigées vers l'intérieur de la cuve et la gorge est ménagée près du talon du joint. La gorge est ainsi ménagée dans une partie relativement rigide du joint, ce qui assure une certaine stabilité dimensionnelle à la gorge.

Selon une version avantageuse de l'invention, la gorge a une section semi-circulaire. Ainsi, la gorge est largement ouverte vers l'extérieur et le débit de fuite est réglé par la section de la gorge à l'aplomb du bord de la cuve.

Selon un mode de réalisation préféré de l'invention, le joint comporte une gorge sur chaque face latérale. Ainsi, lors du montage du joint sur le couvercle, il n'est pas nécessaire de se préoccuper du sens dans lequel le joint est monté.

Selon un autre aspect préféré de l'invention, le poussoir du dispositif de sécurité comporte un épaulement en regard d'un bord de l'ouverture latérale du couvercle. Ainsi, le mouvement du poussoir est déterminé avec précision et on évite que la partie de joint s'étendant vers l'extérieur au-delà de la gorge ne soit elle-même repoussée vers l'intérieur de la cuve.

D'autres caractéristiques et avantages de l'invention résulteront encore de la description ci-après d'un exemple non limitatif en référence aux dessins annexés parmi lesquels:

la figure 1 est une vue de dessus partielle, partiellement écorchée, d'un autocuiseur selon l'invention, en position fermée;

la figure 2 est une vue en coupe selon le plan II-II de la figure 1;
la figure 3 est une vue de dessus analogue à celle de la figure 1 dans une position mal fermée ou semi-ouverte de l'autocuiseur;
la figure 4 est une vue en coupe selon le plan IV-IV de la figure 3;
la figure 5 est une vue en coupe selon le plan V-V de la figure 3.

En référence aux figures, l'autocuiseur selon l'invention comporte de façon classique une cuve 1 équipée d'un couvercle 2. Un joint d'étanchéité 3 est disposé entre la cuve 1 et le couvercle 2 le long de leurs bords. L'autocuiseur comporte des moyens de fermeture à baïonnette comportant une série de rampes 4 portées par la cuve et s'étendant vers l'extérieur de celle-ci et une série de rampes complémentaires 5 portées par le couvercle et s'étendant vers l'intérieur de celui-ci.

Afin de permettre une manoeuvre relative de la cuve et du couvercle, le couvercle 2 est équipé d'une poignée 6 et la cuve 1 est équipée d'une poignée 7.

A l'intérieur de la poignée du couvercle, est logé un dispositif de fuite contrôlée du joint d'étanchéité 3, comportant un poussoir 8 monté sur le couvercle 2, passant dans une ouverture latérale 9 de ce couvercle et agissant contre le joint 3 sous l'action d'un ressort de rappel 10. Ce poussoir 8 est retenu par une rampe 4 de la cuve lorsque le couvercle est complètement fermé. Ce poussoir 8 pousse le joint vers l'intérieur de la cuve lorsque le couvercle est incomplètement fermé et que ce poussoir n'est plus retenu par la rampe.

Conformément à l'invention, le joint d'étanchéité 3 comprend au moins une gorge 11 parallèle à un bord de celui-ci et ménagée sur une face de ce joint adjacente au bord de la cuve comprenant les rampes 4. La position de cette gorge 11 par rapport au bord de la cuve est telle que, lorsque le couvercle est complètement fermé, cette gorge 11 est en appui sur les rampes 4 faisant saillie à l'extérieur de la cuve 1 et communique vers l'extérieur dans les zones intermédiaires entre les rampes; cette gorge 11 communique avec l'intérieur de la cuve lorsque le couvercle est incomplètement fermé et que le joint 3 est poussé vers l'intérieur de la cuve par le poussoir 8.

Dans la réalisation représentée, le joint 3 comprend un talon portant deux lèvres d'étanchéité dirigées vers l'intérieur de la cuve et la gorge 11 est ménagée près du talon du joint.

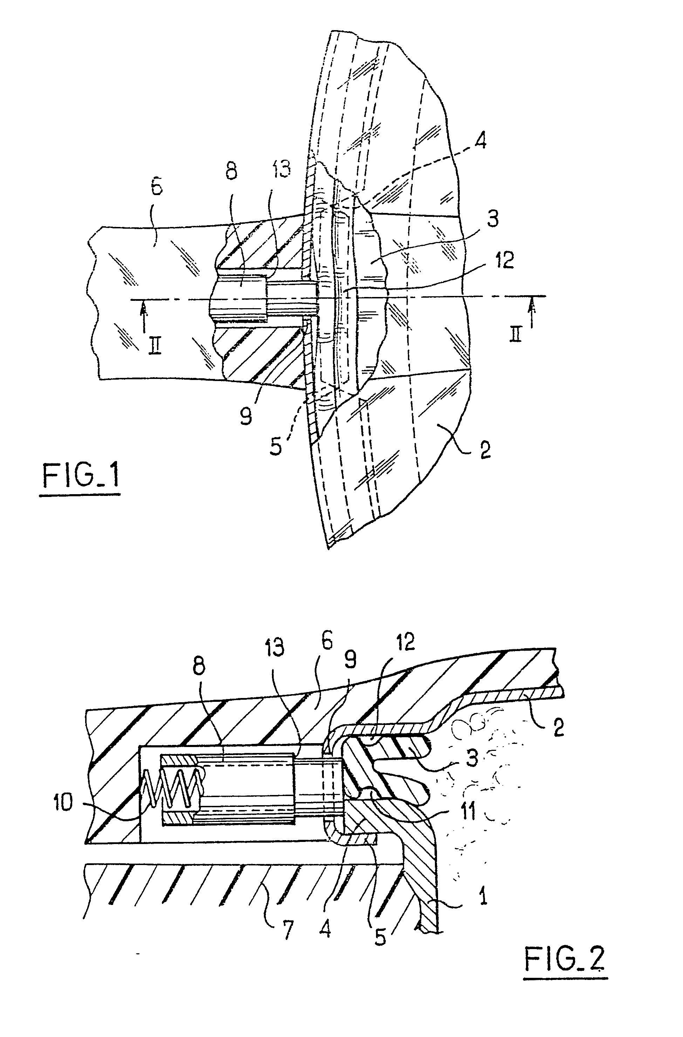

On remarque sur les figures 2, 4 et 5 que la gorge 11 a de préférence une section sensiblement semi-circulaire.

Sur le mode de réalisation préféré illustré, le joint d'étanchéité comporte une seconde gorge 12 analogue à la gorge 11 mais sur la face latérale opposée du joint d'étanchéité 3.

Le poussoir 8 comporte de préférence un épaulement 13 en regard d'un bord de l'ouverture latérale 9 du couvercle 2.

Le fonctionnement du dispositif selon l'invention est le suivant: lorsque l'autocuiseur est convenablement fermé, comme cela est représenté sur les figures 1 et 2, le fonctionnement est identique au fonctionnement habituel du dispositif de sécurité, c'est-à-dire que le poussoir 8 est repoussé vers l'extérieur par la rampe 4 de la cuve 1 et le joint d'étanchéité s'appuie sur le bord interne de la cuve 1 sur tout le pourtour de celle-ci assurant sa fonction d'étanchéité et permettant une mise en pression de l'autocuiseur. La gorge 11 est alors entièrement à l'extérieur de la cuve 1.

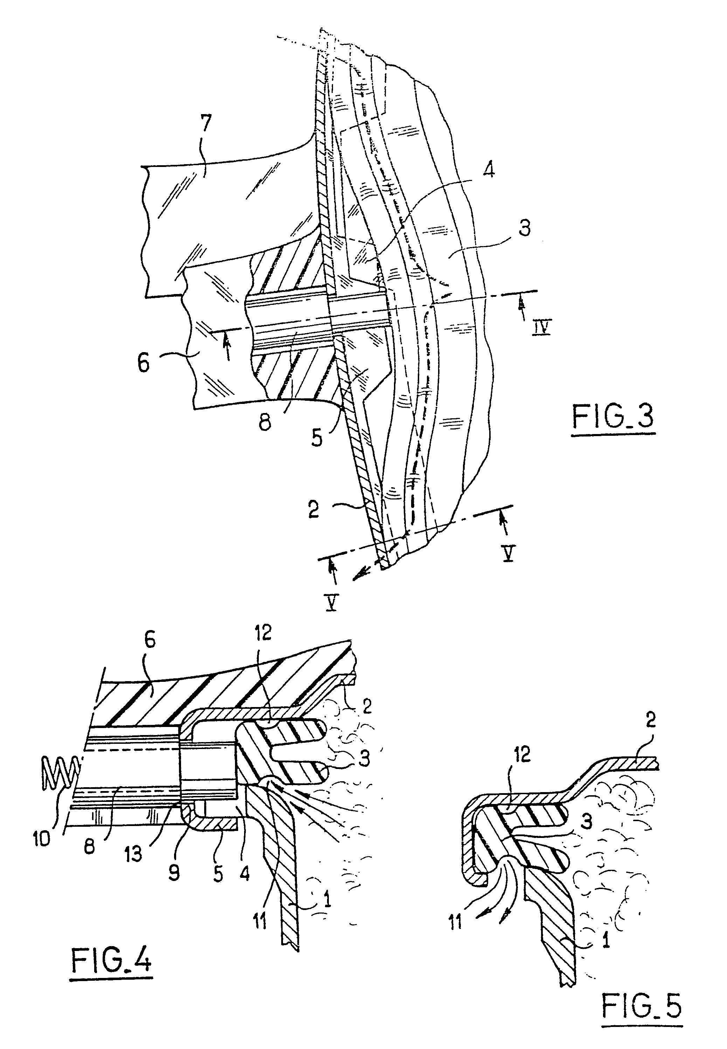

Lors de l'ouverture ou lorsque l'autocuiseur a été mal fermé, comme représenté sur les figures 3 et 5, les rampes 4 de la cuve 1 et les rampes 5 du couvercle 2 se chevauchent seulement partiellement, ce qui risquerait de provoquer une ouverture brutale si l'autocuiseur était mis ou maintenu en pression. Dans ce cas toutefois, le poussoir 8 n'est plus maintenu en position rétractée par la rampe 4 de la cuve 1 et pousse localement le joint d'étanchéité vers l'intérieur de la cuve sous l'action du ressort de rappel 10. Par ce mouvement, une partie de la gorge 11 s'étend à l'intérieur de la cuve (figure 4), et les vapeurs sous pression éventuellement contenues dans la cuve circulent dans la gorge 11 jusqu'à la partie de joint d'étanchéité adjacente qui n'est pas repoussée par le poussoir 8 et dont la partie de gorge 11 correspondante est donc à l'extérieur de la cuve, comme représenté sur les figures 3 et 5.

On comprend donc que la déformation du joint d'étanchéité permet une mise en communication de l'intérieur et de l'extérieur de la cuve par l'intermédiaire de la gorge 11. En raison de la forme semi-circulaire de la gorge 11, celle-ci est largement ouverte vers l'intérieur de la cuve dans la partie repoussée et vers l'extérieur de la cuve dans la partie adjacente. Le débit de vapeur dans la gorge 11 est donc déterminé par la section de celle-ci au niveau de son passage audessus du bord de la cuve 1. Contrairement au dispositif antérieur où le débit de fuite dépendait de la façon dont le poussoir 8 agissait sur le joint d'étanchéité 3, le dispositif selon l'invention permet de contrôler exactement le débit de vapeur en dimensionnant la gorge 11 de façon appropriée. De plus, la gorge 11 canalise la vapeur en des points écartés de la poignée 6, ce qui permet à l'utilisateur de manoeuvrer celle-ci sans risquer d'être brûlé par les dégagements de vapeur.

On remarque que pendant le fonctionnement décrit ci-dessus, les bords de la gorge 12 sont restés continuellement en contact avec la partie supérieure du couvercle 2 et aucun débit de fuite n'est créé par celle-ci. La fonction de la gorge 12 est essentiellement de permettre un montage du joint d'étanchéité 3 dans n'importe quel sens, ce qui améliore les cadences de fabrication de l'autocuiseur.

On remarque également que lors de la fuite contrôlée, l'épaulement 13 du poussoir 8 vient en butée contre la face latérale du couvercle 2 (figure 4) de sorte que le joint d'étanchéité 3 est repoussé d'une distance constante et en particulier la partie de joint d'étanchéité extérieure à la gorge 11 reste en contact avec le bord supérieur de la cuve 1 et évite une fuite incontrôlée au niveau du poussoir 8.

Bien entendu, l'invention n'est pas limitée au mode de réalisation décrit ci-dessus et on peut y apporter des variantes d'exécution.

En particulier, on peut donner aux gorges 11 et 12, toute section désirée. De même, bien que le joint d'étanchéité 3 ait été représenté sous la forme d'un profilé en U, le joint d'étanchéité peut avoir d'autres formes appropriées a la forme du couvercle et du bord de la cuve.

**Revendications**

1. Autocuiseur comportant une cuve (1), un couvercle (2), un joint d'étanchéité (3) entre la cuve et le couvercle, des rampes (4, 5) ménagées respectivement sur le bord de la cuve et le bord du couvercle coopérant ensemble pour assurer une fermeture à baïonnette, un dispositif de fuite contrôlée du joint d'étanchéité (3) comportant un poussoir (8) monté sur le couvercle (2), passant dans une ouverture latérale (9) du couvercle et agissant contre le joint (3) sous l'action de moyens de rappel (10), ce poussoir (8) étant retenu par une rampe (4) de la cuve lorsque le couvercle est complètement fermé et ce poussoir (8) poussant le joint (3) vers l'intérieur de la cuve lorsque le couvercle est incomplètement fermé et que ce poussoir n'est plus retenu par ladite rampe (4), caractérisé en ce que le joint d'étanchéité (3) comprend au moins une gorge (11) parallèle à un bord de celui-ci et ménagée sur une face de ce joint adjacente au bord de la cuve comprenant lesdites rampes (4), la position de cette gorge (11) par rapport au bord de la cuve étant telle que lorsque le couvercle est complètement fermé, cette gorge (11) est en appui sur les rampes (4) faisant saillie à l'extérieur de la cuve (1) et communique vers l'extérieur dans les zones intermédiaires entre les rampes, cette gorge (11) communiquant avec l'intérieur de la cuve lorsque le couvercle est incomplètement fermé et que le joint (3) est poussé vers l'intérieur de la cuve par le poussoir (8).

2. Autocuiseur conforme à la revendication 1, le joint comprenant un talon portant deux lèvres d'étanchéité dirigées vers l'intérieur de la cuve, caractérisé en ce que la gorge (11) est ménagée près du talon du joint.

3. Autocuiseur conforme à l'une des revendications 1 ou 2, caractérisé en ce que la gorge (11) a une section semi-circulaire.

4. Autocuiseur conforme à l'une des revendications 1 à 3, caractérisé en ce que le joint d'étanchéité (3) comporte une gorge (11, 12) sur chaque face latérale de ce joint.

5. Autocuiseur conforme à l'une des revendications 1 à 5, caractérisé en ce que le poussoir (8) comporte un épaulement (13) en regard d'un bord de l'ouverture latérale (9) du couvercle (2).

**Patentansprüche**

1. Druckkocher bestehend aus einem Gefäß (1), einem Deckel (2), einer Dichtung (3) zwischen dem Gefäß und dem Deckel, am Rand des Gefäßes und am Rand des Deckels vorgesehenen Rampen (4, 5), die Zusammenwirken, um einen Bajonettverschluß zu ermöglichen, und einer Dichtung (3) zugeordneten Einrichtung zur kontrollierten Ausströmung, bestehend aus einem an dem Deckel (2) montierten Stößel (8), der in eine seitliche Öffnung (9) des Deckels eintritt und unter der Wirkung von Rückholmitteln (10) auf die Dichtung (3) einwirkt, wobei dieser Stößel (8) von einer Rampe (4) des Gefäßes zurückgehalten wird, wenn der Deckel vollständig geschlossen ist, und die Dichtung (3) in Richtung auf das Gefäßinnere drückt, wenn der Deckel unvollständig geschlossen ist und dieser Stößel nicht mehr von der genannten Rampe (4) zurückgehalten wird, dadurch gekennzeichnet, daß die Dichtung (3) mindestens eine Rille (11) aufweist, die zu einem Rand derselben parallel verläuft und auf einer an den die genannten Rampen (4) aufweisenden Gefäßrand angrenzenden Seite dieser Dichtung ausgebildet ist, wobei die Lage dieser Rille (11) in bezug auf den Gefäßrand so ist, daß die Rille (11) an den vom Gefäß nach außen vorspringenden Rampen (4) anliegt und in den zwischen den Rampen liegenden Zonen mit der Außenseite des Gefäßes (1) in Verbindung ist, wenn der Deckel vollständig geschlossen ist, und mit dem Gefäßinneren in Verbindung steht, wenn der Deckel unvollständig geschlossen ist und die Dichtung (3) von dem Stößel (8) in Richtung auf das Gefäßinnere gedrückt wird.

2. Druckkocher nach Anspruch 1 bei welchem die Dichtung einen zwei gegen das Gefässinnere gerichtete Dichtungslippen tragenden Ansatz aufweist, dadurch gekennzeichnet, daß die Rille (11) nahe dem Ansatz der Dichtung angeordnet ist.

3. Druckkocher nach Anspruch 1 oder 2, dadurch gekennzeichnet, daß die Rille (11) halbkreisförmigen Querschnitt aufweist.

4. Druckkocher nach einem der Ansprüche 1 bis 3, dadurch gekennzeichnet, daß die Dichtung (3) an jeder Seitenfläche dieser Dichtung eine Rille (11, 12) besitzt.

5. Druckkocher nach einem der Ansprüche 1 bis 4, dadurch gekennzeichnet, daß der Stößel (8) gegenüber einem Rand der seitlichen Öffnung (9) des Deckels (2) eine Schulter (13) aufweist.

## Claims

1. A pressure cooker constituted by a pressure vessel (1), a lid (2), a sealing gasket (3) between the pressure vessel and the lid, guide ramps (4, 5) formed respectively on the edge of the pressure vessel and on the edge of the lid and adapted to cooperate with each other in order to provide a bayonet closure system, a device having the function of producing controlled leakage of the sealing gasket (3) and provided with a push-rod (8) mounted on the lid (2) so as to pass through a lateral opening (9) of said lid and to exert a thrust on the sealing gasket (3) under the action of restoring means (10), said push-rod (8) being retained by a guide ramp (4) of the pressure vessel when the lid is completely closed, the function of said push-rod (8) being to thrust the gasket (3) towards the interior of the pressure vessel when the lid is incompletely closed and when said push-rod is no longer retained by said guide ramp (4), characterized in that the sealing gasket (3) has at least one groove (11) parallel to one edge of said gasket and formed on one gasket face adjacent to that edge of the pressure vessel which is provided with said guide ramps (4), the position of said groove (11) with respect to the edge of the pressure vessel being such that when the lid is completely closed, said groove (11) is applied against the guide ramps (4) which project externally of the pressure vessel (1) and communicates with the external atmosphere in the intermediate zones between the ramps, said groove (11) being intended to communicate with the interior of the pressure vessel when the lid is incompletely closed and when the sealing gasket (3) is thrust by the push-rod (8) towards the interior of said pressure vessel.

2. A pressure cooker according to claim 1 in which the sealing gasket has an external heel provided with two sealing lips directed towards the interior of the pressure vessel, characterized in that the groove (11) is formed near the gasket heel.

3. A pressure cooker according to claim 1 or claim 2, characterized in that the groove (11) has a semicircular cross-section

4. A pressure cooker according one of claims 1 to 3, characterized in that the sealing gasket (3) is provided with a groove (11, 12) in each lateral face of said gasket.

5. A pressure cooker according to one of claims 1 to 4, characterized in that the push-rod (8) has a shoulder (13) located opposite to one edge of the lateral opening (9) of the lid (2).

FIG_1

FIG_2

FIG. 3

FIG. 4

FIG. 5